# EUROPÄISCHE PATENTANMELDUNG

(11) **EP 4 545 346 A1**
(43) Veröffentlichungstag der Anmeldung: **30.04.2025**
(21) Anmeldenummer: 24208295.6
(22) Anmeldetag: 23.10.2024
(51) Int. Cl.: B60L 53/10, B60L 53/30

(54) **LADESTATION FÜR ELEKTROFAHRZEUGE**

(30) Priorität: 26.10.2023 DE 102023129571
(71) Anmelder: Compleo Charging Solutions GmbH & Co. KG, 58513 Lüdenscheid (DE)
(72) Erfinder: Die Erfindernennung liegt noch nicht vor
(74) Vertreter: Gottschald Patentanwälte Partnerschaft mbB

(57) **Zusammenfassung**

Die Erfindung betrifft eine Ladestation für Elektrofahrzeuge (2), insbesondere Schnellladestation (3) für Elektrofahrzeuge (2), wobei die Ladestation (1) ein Stationsgehäuse (4) und mindestens eine Stationskomponente (5), insbesondere mindestens ein Leistungsmodul (6) mit einer Leistungselektronik (7), aufweist, wobei die Stationskomponente (5) innerhalb des Stationsgehäuses (4) angeordnet ist, wobei das Stationsgehäuse (4) eine Wartungsöffnung (8), über welche die Stationskomponente (5) innerhalb des Stationsgehäuses (4) wartbar ist, und eine Wartungsklappe (10) aufweist, wobei die Wartungsklappe (10) im Zuge eines Öffnungsvorgangs die Wartungsöffnung (8) freigibt und im Zuge eines Schließvorgangs die Wartungsöffnung (8) verschließt, wobei die Ladestation (1) eine Netzwerkeinheit (11) aufweist, durch welche ein Wartungsnetzwerk (9) zum Verbinden der Ladestation (1) mit einem Wartungsgerät bereitstellbar ist. Es wird vorgeschlagen, dass der Öffnungsvorgang der Wartungsklappe (10) eine Einschaltroutine auslöst und dass im Zuge der Einschaltroutine das Wartungsnetzwerk (9) durch die Netzwerkeinheit (11) aufgebaut wird.

## Beschreibung

Die vorliegende Erfindung betrifft eine Ladestation für Elektrofahrzeuge gemäß dem Oberbegriff von Anspruch 1.

Mittels Ladestationen können etwa Elektrofahrzeuge, wie Automobile, Lastkraftfahrzeuge, Schiffe und dergleichen aufgeladen werden. Es haben sich dabei insbesondere als Schnellladestationen ausgebildete Ladestationen bewährt, deren Aufladezeiten aufgrund von zur Aufladung eingesetzten Gleichstrom verkürzt ist.

Bekannte Ladestationen weisen mindestens eine Stationskomponente auf, welche innerhalb eines Stationsgehäuses angeordnet ist. Bei Schnellladestationen kann mindestens ein Leistungsmodul als Stationskomponente, in der Regel mehrere Leistungsmodule vorgesehen sein, über welche eine entsprechende Leistung zum Aufladen eines mit der Schnellladestation verbundenen Elektrofahrzeugs bereitgestellt werden kann. Das Leistungsmodul ist bzw. die Leistungsmodule sind innerhalb des Stationsgehäuses angeordnet.

Zwecks Wartung der Stationskomponente oder der Stationskomponenten, insbesondere des Leistungsmoduls oder der Leistungsmodule, der Ladestation weist das Stationsgehäuse bekannter Ladestationen häufig eine Wartungsöffnung auf, über welche die Stationskomponente innerhalb des Stationsgehäuses gewartet werden kann. Es ist denkbar, dass über die Wartungsöffnung auch eine Installation der Stationskomponente bzw. der Stationskomponenten erfolgt. Damit die Wartungsöffnung während der Wartung zugänglich, sonst aber unzugänglich ist, weist das Stationsgehäuse ferner eine Wartungsklappe auf. Die Wartungsklappe gibt die Wartungsöffnung bedarfsweise frei oder verschließt diese.

Neben dem "physischen" Zugang über die Wartungsöffnung besteht bei bekannten Ladestationen, insbesondere bei bekannten Schnellladestationen, darüber hinaus die Möglichkeit, sich einen "digitalen" Zugang zu der Ladestation, also etwa einen steuerungstechnischen Zugriff auf die Ladestation über eine Steuereinheit, o.ä., zu verschaffen. Hierfür weist die Ladestation eine Netzwerkeinheit auf, durch welche ein Wartungsnetzwerk bereitgestellt wird. Über das Wartungsnetzwerk lässt sich ein, insbesondere externes, Wartungsgerät, wie beispielsweise ein Computer, ein Handheld, ein Smartphone, o.ä., mit der Ladestation verbinden, wodurch etwa ein Techniker im Zuge einer Wartung digitalen Zugriff auf die Ladestation erlangt. Durch den digitalen Zugriff auf die Ladestation können beispielsweise Konfigurationen vorgenommen, Informationen, wie Status- und/oder Fehlermeldungen, ausgelesen oder sonstige digitalen Einstellungen, Einrichtungen und Steuerungen vorgenommen werden.

Obschon sich das durch die Netzwerkeinheit bereitgestellte Wartungsnetzwerk eignet, um ohne große Mühen ein drahtloses Verbinden der Ladestation und einem Wartungsgerät zu ermöglichen, so ist es hierdurch gleichermaßen erforderlich, einen unbefugten Zugriff auf die Ladestation zu verhindern. Ein unbefugter Zugriff könnte beispielsweise Einfluss auf die Betriebssicherheit der Ladestation haben, wenn etwa Nutzerdaten gezielt ausgelesen oder Konfigurationen der Ladestation manipuliert werden. Zum Schutz vor unbefugtem Zugriff ist daher häufig als gängige Maßnahme ein Passwort vorgesehen, welches im Zuge der Herstellung der Verbindung durch einen Techniker einzugeben ist. Zwar bietet dies durchaus einen gewissen Schutz vor unbefugtem Zugriff, gleichwohl besteht der Bedarf, insbesondere mit zunehmender Relevanz des digitalen Zugriffs auf Ladestation, die Betriebssicherheit der Ladestation hinsichtlich des durch die Netzwerkeinheit bereitgestellten Wartungsnetzwerks weiter zu verbessern.

Der Erfindung liegt das Problem zugrunde, die bekannte Ladestation derart auszugestalten und weiterzubilden, dass hinsichtlich der Betriebssicherheit der Ladestation eine weitere Optimierung erreicht wird.

Das obige Problem wird durch die Merkmale des kennzeichnenden Teils von Anspruch 1 gelöst.

Wesentlich ist die grundsätzliche Überlegung, dass das Wartungsnetzwerk durch die Netzwerkeinheit bedarfsweise, also etwa, insbesondere ausschließlich, während einer Wartung, aufgebaut wird. Das Wartungsnetzwerk kann dabei insbesondere ein lokales Funknetzwerk sein, welches insbesondere unabhängig von anderen Netzwerken, wie öffentlichen Telefon- oder Datennetzwerken, etc., arbeitet. Das bedarfsweise Aufbauen des Wartungsnetzwerks erfolgt im Zuge einer Einschaltroutine, welche durch den Öffnungsvorgang der Wartungsklappe ausgelöst wird. Während im Stand der Technik das Wartungsnetzwerk zu jeder Zeit aufgebaut ist und damit ein Verbinden zu der Ladestation möglich ist, so wird vorschlagsgemäß das Wartungsnetzwerk nach Bedarf, also beispielsweise im Zuge einer Wartung, aufgebaut, so dass erst nach erfolgtem Aufbauen des Wartungsnetzwerks ein drahtloses Verbinden zu der Ladestation überhaupt möglich ist. Das Aufbauen des Wartungsnetzwerks ist dabei an den Öffnungsvorgang der Wartungsklappe gekoppelt. Der Öffnungsvorgang kann im Zuge der Wartung, beispielsweise durch einen Techniker, erfolgen. Hierdurch kann die Einschaltroutine ausgelöst werden und das zunächst inaktive Wartungsnetzwerk durch die Netzwerkeinheit automatisch aufgebaut werden. Eine Verbindung zu dem Wartungsnetzwerk kann erst nach dessen Aufbauen hergestellt werden, wohingegen eine Verbindung zu dem inaktiven Wartungsnetzwerk nicht möglich ist. Vorschlagsgemäß wird also sichergestellt, dass ein unbefugter digitaler Zugriff, ohne gleichzeitigen physischen Zugriff nicht möglich ist. Hierdurch lässt sich die Betriebssicherheit der Ladestation insgesamt erhöhen. Durch den automatischen Aufbau können sich zusätzliche Arbeitsschritte, beispielsweise durch den Techniker, wie etwa ein manuelles Einschalten des Wartungsnetzwerks, vermeiden lassen.

Im Einzelnen wird vorgeschlagen, dass der Öffnungsvorgang der Wartungsklappe eine Einschaltroutine auslöst und dass im Zuge der Einschaltroutine das Wartungsnetzwerk durch die Netzwerkeinheit aufgebaut wird.

Eine weitere vorteilhafte Ausgestaltung gemäß Anspruch 2 sieht vor, dass eine Öffnungsbewegung der Wartungsklappe die Einschaltroutine auslöst. Die Öffnungsbewegung kann also ursächlich für das Auslösen der Einschaltroutine sein, wodurch sich ein zuverlässiges Auslösen der Einschaltroutine mit dem Öffnen der Wartungsklappe gewährleisten lässt. Alternativ ist es ebenso möglich, dass eine Entriegelung der Wartungsklappe die Einschaltroutine auslöst. Dies kann ein zuverlässiges Auslösen der Einschaltroutine mit dem Entriegelung der Wartungsklappe, welches etwa vor deren Öffnen erfolgt, gewährleisten.

In Anspruch 3 wird eine vorteilhafte Ausgestaltung der Ladestation mit einem Sensor vorgeschlagen. Durch den Sensor lässt sich der Öffnungsvorgang konstruktiv einfach und dabei funktional zuverlässig erfassen. Besonders einfach umsetzbar ist es möglich, dass der Sensor die Öffnungsbewegung oder die Entriegelung der Wartungsklappe erfasst. Dies ist etwa durch einen als Türkontaktschalter ausgebildeten Sensor möglich.

Um die Wartung zu vereinfachen und die Sicherheit für einen Techniker während der Wartung zu verbessern, ist gemäß einer weiteren vorteilhaften Ausgestaltung gemäß Anspruch 4 vorgesehen, dass der Öffnungsvorgang neben der Einschaltroutine auch eine Abschaltroutine auslöst. Durch die Abschaltroutine können gewisse Komponenten oder Vorgänge der Ladestation abgeschaltet werden, so dass von diesen aus während der Wartung keine Gefahr mehr ausgeht. In diesem Zusammenhang ist es denkbar, dass insbesondere Hochspannungs-Komponenten abgeschaltet werden und Niederspannungs-Komponenten unabgeschaltet, also aktiv, bleiben.

Anspruch 5 betrifft die Abschaltung des Wartungsnetzwerks durch eine vordefinierte Abschaltbedingung nach erfolgter Wartung. Je nach festgelegter Abschaltbedingung kann beispielsweise das Abschalten des Wartungsnetzwerks automatisch erfolgen, wodurch sich etwaige Bedienfehler eines Technikers (Vergessen des Abschaltens nach erfolgter Wartung, etc.) vermeiden lassen. Die Betriebssicherheit lässt sich hierdurch weiter steigern, indem vermieden wird, dass ein Wartungsnetzwerk nach erfolgter Wartung zumindest für längere Zeit weiterhin aktiv bleibt. Auch ist es möglich, dass die festgelegte Abschaltbedingung die Wartung als solche vereinfacht, etwa für den Fall, dass die Abschaltbedingung unabhängig von dem Zustand der Wartungsklappe ist und so ein unbeabsichtigtes Trennen der Verbindung zwischen der Ladestation und dem Wartungsgerät beim Schließen der Wartungsklappe vermeiden lässt.

Im Folgenden wird die Erfindung anhand einer lediglich Ausführungsbeispiele darstellenden Zeichnung näher erläutert. In der Zeichnung zeigt
- Fig. 1: eine vorschlagsgemäße Ladestation und ein an die Ladestation angeschlossenes Elektrofahrzeug in perspektivischer Ansicht und
- Fig. 2: die vorschlagsgemäße Ladestation gemäß Fig. 1 während einer Wartung.

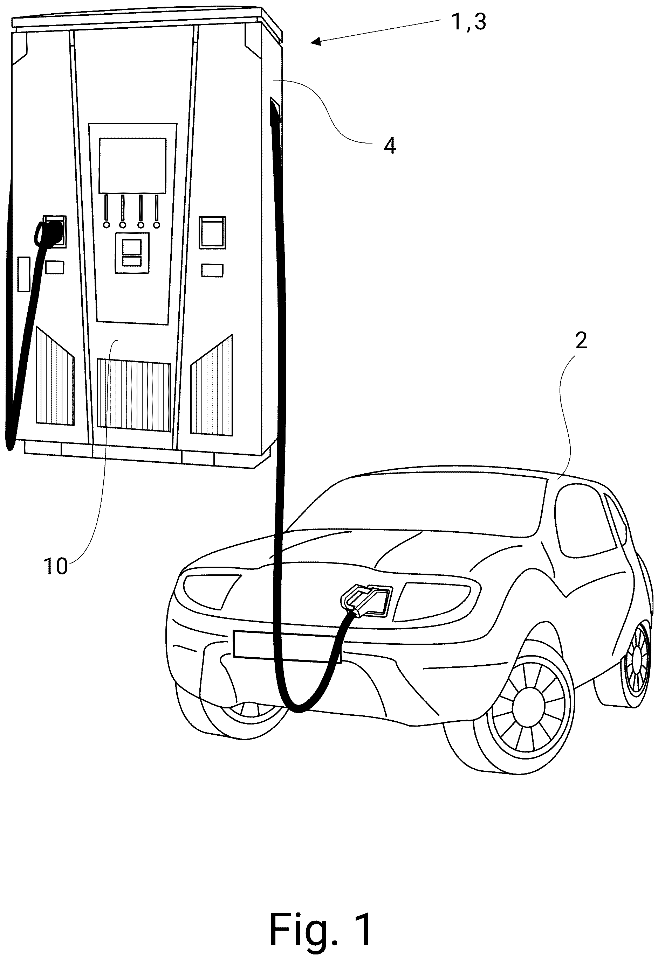

Das in den Figuren dargestellte und insoweit bevorzugte Ausführungsbeispiel betrifft eine Ladestation 1 für Elektrofahrzeuge 2. Hier und vorzugsweise ist die Ladestation 1 als Schnellladestation 3 ausgebildet. Wie exemplarisch in Fig. 1 abgebildet, ist durch die Ladestation 1 ein Elektrofahrzeug 2, wie hier und vorzugsweise ein Automobil, ein Lastkraftfahrzeug, ein Schiff oder dergleichen, aufladbar. Die Ladestation 1 kann insbesondere im öffentlichen Raum eingesetzt werden, was diese u.a. von sogenannten im privaten Bereich eingesetzten "Wallboxen" unterscheidet. Die Ladestation 1 kann etwa, wie in Fig. 1 angedeutet, fest im Boden verankert sein. Die Ladestation 1 kann, wie bereits erwähnt, insbesondere als Schnellladestation 3 ausgebildet sein und Gleichstrom anbieten, so dass das Aufladen des Elektrofahrzeugs 2 zügiger erfolgen kann, was letztlich zu kürzeren Aufladezeiten, etwa im Vergleich zu Wallboxen, führt.

Die Ladestation 1, insbesondere die Schnellladestation 3, weist zunächst ein Stationsgehäuse 4 und mindestens eine Stationskomponente 5 auf. Das Stationsgehäuse 4 kann die Stationskomponente 5, welche innerhalb des Stationsgehäuses 4 angeordnet ist, vor äußeren Einflüssen, wie etwa Wind und Wetter oder Vandalismus, schützen. Es ist denkbar, dass die Ladestation 1 mehrere Stationskomponenten 5 aufweist, welche innerhalb des Stationsgehäuses 4 angeordnet sind.

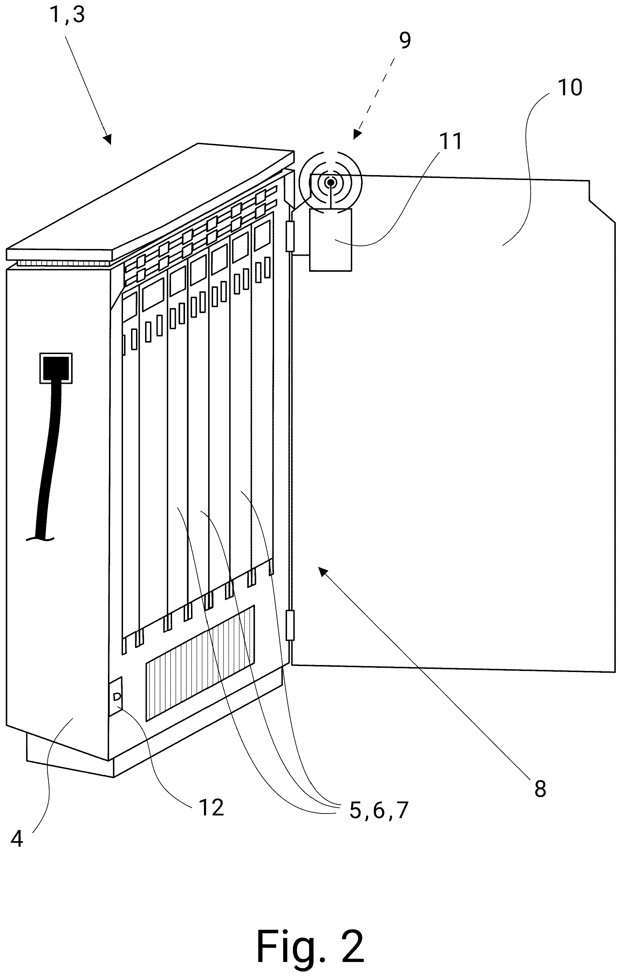

Für den Fall, dass, wie hier, die Ladestation 1 als Schnellladestation 3 ausgebildet ist und vorzugsweise ist die mindestens eine Stationskomponente 5 das Leistungsmodul 6 (Fig. 2). Das Leistungsmodul 6 kann eine entsprechende Leistung zum Aufladen des mit der Schnellladestation 3 verbundenen Elektrofahrzeugs 2 (Fig. 1) bereitstellen. Vorzugsweise und aus Fig. 2 ersichtlich kann die Schnellladestation 3 mehrere Leistungsmodule 6 als Stationskomponenten 5 aufweisen, insbesondere mindestens zwei, vorzugsweise mindestens vier und/oder höchstens neun, weiter vorzugsweise genau sechs, sieben oder acht, aufweisen. Für diesen Fall, können die Leistungsmodule 6 jeweils einen Teil der Gesamtleistung der Schnellladestation 3 zur Verfügung stellen, beispielsweise jeweils 30 kW. Es ist vorzugsweise so, dass die mehreren Leistungsmodule 6 gemeinsam mindestens 150 kW, vorzugsweise mindestens 175 kW, weiter vorzugsweise mindestens 200 kW Leistung stellen.

Das Leistungsmodul 6 weist oder die Leistungsmodule 6 weisen jeweils Leistungselektronik 7, insbesondere einen Stromwandler, auf. Der Stromwandler kann die Wandlung einer eingehenden, insbesondere dreiphasigen, Wechselspannung in eine ausgehende Gleichspannung ermöglichen.

Die Stationskomponente 5, insbesondere das Leistungsmodul 6, ist innerhalb des Stationsgehäuses 4 angeordnet, insbesondere derart, dass die Stationskomponente 5, insbesondere das Leistungsmodul 6, vor äußeren Einflüssen durch das Stationsgehäuse 4 geschützt ist. Im Falle mehrerer Leistungsmodule 6 können insbesondere alle Leistungsmodule 6 innerhalb des Stationsgehäuses 4 angeordnet sein. Das Leistungsmodul 6 kann ebenfalls ein Gehäuse aufweisen. Es ist möglich, dass die Stationskomponente 5, insbesondere das Leistungsmodul 6, austauschbar innerhalb des Stationsgehäuses 4 angeordnet ist, um etwa bei Defekt ausgetauscht werden zu können.

Das Stationsgehäuse 4 weist, insbesondere genau, eine Wartungsöffnung 8 auf, über welche die Stationskomponente 5, insbesondere das Leistungsmodul 6, oder die Stationskomponenten 5, insbesondere die Leistungsmodule 6, innerhalb des Stationsgehäuses 4 wartbar ist bzw. sind. Es ist möglich, dass die Wartungsöffnung 8 auch die Installation und/oder den Austausch der Stationskomponente 5, insbesondere des Leistungsmoduls 6, ermöglicht. So ist es beispielsweise möglich, Messungen zur Wartung an der Stationskomponente 5, insbesondere dem Leistungsmodul 6, durchzuführen und/oder, im Falle eines Austauschs der Stationskomponente 5, insbesondere des Leistungsmoduls 6, die ausgetauschte Stationskomponente 5, insbesondere das ausgetauschte Leistungsmodul 6, anzuschließen und/oder über das Wartungsnetzwerk 9 zu konfigurieren. Durch die Wartungsöffnung 8 können auch weitere Stationskomponenten 5, die keine Leistungsmodule 6 sind, wie etwa Sicherungen, insbesondere alle Sicherungen, der Ladestation 1, insbesondere der Schnellladestation 3, und/oder eine Steckdose, insb. eine Schuko-Steckdose, und/oder Gleichstromschienen und/oder Eingangsschienen und/oder ein Netzanschluss und/oder ein Staubfilter und/oder eine Steuereinheit, zugänglich sein. Hier und vorzugsweise sind alle elektrischen und elektronischen Stationskomponenten 5 und/oder alle zu wartenden Stationskomponenten 5 der Ladestation 1, insbesondere der Schnellladestation 3, über die Wartungsöffnung 8 zugänglich.

Das Stationsgehäuse 4 weist ferner, insbesondere genau, eine Wartungsklappe 10 auf. Die Wartungsklappe 10 ist hier und vorzugsweise als Wartungstür ausgebildet, wie etwa aus Zusammenschau der Figuren 1 und 2 hervorgeht. Die als Wartungstür ausgebildete Wartungsklappe 10 bildet wiederum eine Seitenwand der Ladestation 1, insbesondere der Schnellladestation 3, aus. Die Wartungsklappe 10 kann geschlossen und geöffnet werden. Im Zuge eines Öffnungsvorgangs gibt die Wartungsklappe 10 die Wartungsöffnung 8 frei, wodurch insbesondere die innerhalb des Stationsgehäuses 4 angeordnete Stationskomponente 5, insbesondere das Leistungsmodul 6, oder Stationskomponenten 5, insbesondere die Leistungsmodule 6, zugänglich werden (Fig. 2). Im Zuge eines Schließvorgangs verschließt die Wartungsklappe 10 die Wartungsöffnung 8, wodurch insbesondere die innerhalb des Stationsgehäuses 4 angeordneten Stationskomponenten 5, insbesondere das Leistungsmodul 6 oder die Leistungsmodule 6, unzugänglich werden (Fig. 1).

Wie exemplarisch aus Fig. 2 ersichtlich, weist die Ladestation 1, insbesondere die Schnellladestation 3, ferner eine Netzwerkeinheit 11 auf. Die Netzwerkeinheit 11 kann beispielsweise ein Router, eine Sender-Empfänger-Einheit und/oder ein Teil einer Steuereinheit der Ladestation 1 sein. Die Steuereinheit kann insbesondere mehrteilig ausgebildet sein, wobei die Teile der Steuereinheit räumlich an unterschiedlichen Stellen innerhalb des Stationsgehäuses 4 angeordnet sein können. Es ist möglich, dass ein Teil der Steuereinheit oder die Steuereinheit an der Wartungsklappe 10 angeordnet ist und nach erfolgtem Öffnungsvorgang zugänglich ist. Durch die Netzwerkeinheit 11 ist ein Wartungsnetzwerk 9 zum, insbesondere drahtlosen, Verbinden der Ladestation 1 mit einem, insbesondere externen, Wartungsgerät bereitstellbar. Über das Wartungsnetzwerk 9 kann etwa ein Techniker im Zuge einer Wartung digitalen Zugriff auf die Ladestation 1 erlangen, beispielsweise um Konfigurationen vorzunehmen, Informationen, wie Status- und/oder Fehlermeldungen, auszulesen oder sonstige Einrichtungen, Einstellungen und Steuerungen vorzunehmen. Der Begriff "Wartung" ist im Zusammenhang mit dieser Anmeldung weit zu verstehen und kann insbesondere eine Überprüfung und/oder eine Installation und/oder einen Austausch einer oder mehrerer Stationskomponenten 5, insbesondere das Leistungsmodule 6 oder die Leistungsmodule 6, der Ladestation 1, insbesondere der Schnellladestation 3, umfassen. Das Wartungsnetzwerk 9 kann vorzugsweise ein WLAN-Wartungsnetzwerk oder ein Bluetooth-Wartungsnetzwerk sein. Das Wartungsnetzwerk 9 kann vorzugsweise ein lokales Funknetzwerk, also ein örtliches drahtloses Netzwerk, sein, welches insbesondere unabhängig von anderen Netzwerken, wie etwa Telefonnetzwerken, etc., arbeitet. Hierdurch kann ein unbefugter Fernzugriff, etwa über das Internet, etc., vermieden werden.

Wesentlich bei der Ladestation 1, insbesondere der Schnellladestation 3, ist nun, dass der Öffnungsvorgang der Wartungsklappe 10 eine Einschaltroutine auslöst und dass im Zuge der Einschaltroutine das Wartungsnetzwerk 9 durch die Netzwerkeinheit 11 aufgebaut wird.

Das Wartungsnetzwerk 9 der Ladestation 1 ist nicht zu jeder Zeit aufgebaut. Hierdurch kann ein unbefugter Zugriff vermieden werden, da das Verbinden mit der Ladestation 1 über das Wartungsnetzwerk 9 zunächst das Aufbauen des Wartungsnetzwerks 9 selbst erfordert. Das zunächst inaktive Wartungsnetzwerk 9 wird insoweit bedarfsweise aufgebaut, also beispielsweise, wenn ein Techniker die Wartung der Ladestation 1 durchführen möchte. Eine Verbindung mit dem inaktiven Wartungsnetzwerk 9 kann nicht erfolgen.

"Aufbauen" im Zusammenhang mit dem Wartungsnetzwerk 9 ist im Zusammenhang mit dieser Anmeldung insbesondere derart zu verstehen, dass jener Zustand des Wartungsnetzwerks 9, welcher das Verbinden zu der Ladestation 1 über das Wartungsnetzwerk 9 ermöglicht, hergestellt wird. "Inaktiv" im Zusammenhang mit dem Wartungsnetzwerk 9 ist im Zusammenhang mit dieser Anmeldung insbesondere derart zu verstehen, dass jener Zustand des Wartungsnetzwerks 9, welcher das Verbinden zu der Ladestation 1 nicht ermöglicht, hergestellt ist.

Der Aufbau des Wartungsnetzwerks 9 erfolgt insbesondere automatisch durch die Netzwerkeinheit 11, wobei insbesondere der Öffnungsvorgang ursächlich für das Auslösen der Einschaltroutine und die Einschaltroutine ursächlich für den Aufbau des Wartungsnetzwerks 9 ist. Sobald zumindest ein Teil des Öffnungsvorgangs der Wartungsklappe 10 erfolgt oder erfolgt ist, wird die Einschaltroutine ausgelöst und im Zuge der Einschaltroutine das Wartungsnetzwerk 9 aufgebaut. Die Einschaltroutine kann durch die Netzwerkeinheit 11 und/oder durch einen Teil der Steuereinheit der Ladestation 1 durchgeführt werden. Es ist weiterhin möglich, dass das Wartungsnetzwerk 9 durch ein Passwort und/oder andere Zugriffssicherungsmaßnahmen geschützt ist.

Neben dem Aufbau des Wartungsnetzwerks 9 ist es ganz allgemein denkbar, dass im Zuge der Einschaltroutine zumindest eine weitere Funktion, insbesondere eine Wartungsfunktion, eingeschaltet wird. Dies kann etwa durch einen Teil der Steuereinheit erfolgen. So ist es etwa möglich, dass im Zuge der Einschaltroutine als weitere Funktion ein Wartungslicht der Ladestation 1 eingeschaltet wird. Das Wartungslicht kann dem Techniker eine vereinfachte Sicht auf die Stationskomponente 5 oder die Stationskomponenten 5 der Ladestation 1, welche innerhalb des Stationsgehäuses 4 angeordnet sind, wie insbesondere auf das Leistungsmodul 6 oder auf die Leistungsmodule 6, ermöglichen. Auch ist es als weitere Funktion möglich, dass ein Prüfprogramm, etwa von der Steuereinheit, ausgeführt wird, dessen Ergebnis etwa durch den Techniker auslesbar ist.

Hinsichtlich des Öffnungsvorgangs ist vorzugsweise vorgesehen, dass der Öffnungsvorgang eine Öffnungsbewegung der Wartungsklappe 10 umfasst und dass die Öffnungsbewegung die Einschaltroutine auslöst. Die Öffnungsbewegung kann also ursächlich für die Einschaltroutine sein. Wie etwa aus Zusammenschau der Figuren 1 und 2 ersichtlich, kann die Öffnungsbewegung eine schwenkende Öffnungsbewegung sein.

Neben der, insbesondere schwenkenden, Öffnungsbewegung der Wartungsklappe 10 kann der Öffnungsvorgang auch eine Entriegelung der Wartungsklappe 10 umfassen. Vor der Entriegelung kann die Wartungsklappe 10 verriegelt sein, wodurch eine Öffnungsbewegung verhindert wird. Dies lässt sich beispielsweise über ein, mechanisches oder teil-mechanisches, Schloss realisieren. Ein derartiges Schloss lässt sich etwa mit einem Schlüssel schließen, durch einen Griff betätigen und/oder einen Antrieb ansteuern. Nach der Entriegelung kann die Wartungsklappe 10 entriegelt sein, wodurch eine Öffnungsbewegung ermöglicht wird.

Hinsichtlich des Auslösens der Einschaltroutine ist in diesem Zusammenhang vorzugsweise vorgesehen, dass die Entriegelung die Einschaltroutine auslöst. Alternativ kann auch die Öffnungsbewegung der Wartungsklappe 10 die Einschaltroutine auslösen. Mit anderen Worten kann die Einschaltroutine etwa beim Schließen, also bei Betätigung, des Schlosses oder beim Bewegen der Wartungsklappe 10 im Zuge der Öffnungsbewegung ausgelöst werden.

Um den Öffnungsvorgang erfassen zu können, ist vorzugsweise vorgesehen, dass die Ladestation 1 einen Sensor 12 zum Erfassen zumindest eines Teils des Öffnungsvorgangs aufweist. Es ist dabei möglich, dass der Sensor 12 einen Teil des Öffnungsvorgangs erfasst, beispielsweise die Entriegelung der Wartungsklappe 10 oder den Anfang der Bewegung der Wartungsklappe 10 im Zuge der Öffnungsbewegung, oder aber den vollständigen Öffnungsvorgang, also beispielsweise die Entriegelung und die anschließende Öffnungsbewegung der Wartungsklappe 10. Der Sensor 12 ist vorzugsweise derart eingerichtet ist, dass die Öffnungsbewegung der Wartungsklappe 10 und/oder die Entriegelung der Wartungsklappe 10 durch den Sensor 12 erfasst wird. Der Sensor 12 kann auch zumindest einen Teil des Schließvorgangs erfassen.

Grundsätzlich kommen im Zusammenhang mit dem Sensor 12 unterschiedlichste Arten von Sensoren 12 infrage. So ist es möglich, dass der Sensor 12 als Schalter oder Taster ausgebildet ist. Besonders bevorzugt und bei dem Ausführungsbeispiel gemäß Fig. 2 vorgesehen, ist der Sensor 12 als Türkontaktschalter ausgebildet.

Ganz allgemein ist es denkbar, dass neben der Einschaltroutine auch eine Abschaltroutine, im Zuge welcher gewisse Stationskomponenten 5 oder Vorgänge der Ladestation 1 abgeschaltet werden, auslösbar ist. So ist es beispielsweise möglich, alle Stationskomponenten 5 und Vorgänge der Ladestation 1 abzuschalten, von denen eine Gefahr für einen Techniker im Zuge der Wartung ausgehen kann.

Vorzugsweise ist vorgesehen, dass der Öffnungsvorgang der Wartungsklappe 10 die Abschaltroutine auslöst und dass im Zuge der Abschaltroutine zumindest ein Teil einer Elektronik oder die Elektronik der Ladestation 1, insbesondere automatisch, abgeschaltet und/oder ein Ladevorgang unterbrochen wird. Für den Fall, dass die Ladestation 1 als Schnellladestation 3 ausgebildet ist, kann zumindest ein Teil der Leistungselektronik 7, insbesondere der Stromwandler, oder die Leistungselektronik 7, insbesondere automatisch, abgeschaltet und/oder ein Ladevorgang unterbrochen wird.

Die Abschaltroutine kann durch einen Teil der Steuereinheit der Ladestation 1, wie etwa eine Abschalteinheit, durchgeführt werden. Es ist vorzugsweise vorgesehen, dass die Spannungsversorgung bestimmter Stationskomponenten 5 der Ladestation 1, wie beispielsweise jener Stationskomponenten 5, die durch Niederspannung versorgbar sind, wie die Netzwerkeinheit 11, im Zuge der Abschaltroutine nicht abgeschaltet werden. Besonders vorzugsweise ist vorgesehen, dass die Öffnungsbewegung der Wartungsklappe 10 die Abschaltroutine auslöst, oder, dass die Entriegelung der Wartungsklappe 10 die Abschaltroutine auslöst. Ein Zusatzsensor ist in diesem Zusammenhang möglich, aber nicht erforderlich, da zumindest ein Teil des Öffnungsvorgangs ohnehin durch den vorzugsweisen Sensor 12 erfassbar ist.

Es ist möglich, dass der Schließvorgang der Wartungsklappe 10 eine Hochfahrroutine auslöst und dass im Zuge der Hochfahrroutine zumindest ein Teil der Elektronik, insbesondere die Leistungselektronik 7, vorzugsweise der Stromwandler, oder die Elektronik, insbesondere die Leistungselektronik 7, insbesondere automatisch, eingeschaltet und/oder ein Ladevorgang gestartet oder fortgeführt wird. Es ist möglich, dass der vorzugsweise Sensor 12 zumindest einen Teil des Schließvorgangs erfasst. Alternativ ist auch ein Zusatzsensor zum Erfassen zumindest eines Teils des Schließvorgangs denkbar.

Neben dem bedarfsweisen Aufbau des Wartungsnetzwerks 9 ist besonders vorzugsweise auch das bedarfsweise Abschalten des Wartungsnetzwerks 9 vorgesehen. Hierdurch lässt sich etwa sicherstellen, dass nach erfolgter Wartung durch einen Techniker das unbefugte Verbinden mit der Ladestation 1 verhindert wird. Mit anderen Worten wird sichergestellt, dass das aufgebaute Wartungsnetzwerk 9 nach erfolgter Wartung wieder inaktiviert wird. Es ist daher vorzugsweise vorgesehen, dass die Netzwerkeinheit 11 das Wartungsnetzwerk 9 entsprechend einer vordefinierten Abschaltbedingung abschaltet. Das Abschalten kann dabei insbesondere automatisch erfolgen. Sobald eine vordefinierte, also etwa durch den Hersteller oder Betreiber der Ladestation 1 festgelegte, Abschaltbedingung erfüllt ist, wird das Wartungsnetzwerk 9 abgeschaltet. Es ist vorzugsweise möglich, dass die Abschaltbedingung eine Zeitbedingung umfasst. Beispielsweise ist ein bestimmtes Zeitintervall festgelegt, über welches hinweg das aufgebaute Wartungsnetzwerk 9 aufgebaut bleibt. Nach Ablauf des Zeitintervalls wird das Wartungsnetzwerk 9 inaktiviert. Alternativ oder zusätzlich ist es ebenfalls denkbar, dass die Abschaltbedingung eine Verbindungsbedingung umfasst. Beispielsweise ist festgelegt, dass nach Abbruch oder Beendigung der Verbindung der Ladestation 1 mit dem Wartungsgerät, welcher bzw. welche etwa seitens des Technikers über das Wartungsgerät vorgenommen wird, das Wartungsnetzwerk 9 inaktiviert wird. Alternativ oder zusätzlich ist es möglich, dass die Abschaltbedingung eine Sensorbedingung 12 umfasst. Hier kann vorgesehen sein, dass im Zuge der Schließbewegung der Wartungsklappe 10 das Wartungsnetzwerk 9 inaktiviert wird.

Es ist möglich, dass, sofern vorhanden, bestehende Verbindungen zur Ladestation 1 beim Erfüllen der Abschaltbedingung automatisch beendet werden. Eine Kombination der Sensorbedingung 12, Zeitbedingung und/oder Verbindungsbedingung ist denkbar. Die Kombination kann dabei als "und"-Bedingung, bei welcher mehrere Bedingungen erfüllt sein müssen, um das Wartungsnetzwerk 9 abzuschalten, und/oder als "oder"-Bedingung, bei welcher mindestens eine von mehreren Bedingungen erfüllt sein muss, um das Wartungsnetzwerk 9 abzuschalten, realisiert sein.

## Patentansprüche

1. Ladestation für Elektrofahrzeuge (2), insbesondere Schnellladestation (3) für Elektrofahrzeuge (2), wobei die Ladestation (1) ein Stationsgehäuse (4) und mindestens eine Stationskomponente (5), insbesondere mindestens ein Leistungsmodul (6) mit einer Leistungselektronik (7), aufweist, wobei die Stationskomponente (5) innerhalb des Stationsgehäuses (4) angeordnet ist, wobei das Stationsgehäuse (4) eine Wartungsöffnung (8), über welche die Stationskomponente (5) innerhalb des Stationsgehäuses (4) wartbar ist, und eine Wartungsklappe (10) aufweist, wobei die Wartungsklappe (10) im Zuge eines Öffnungsvorgangs die Wartungsöffnung (8) freigibt und im Zuge eines Schließvorgangs die Wartungsöffnung (8) verschließt, wobei die Ladestation (1) eine Netzwerkeinheit (11) aufweist, durch welche ein Wartungsnetzwerk (9) zum Verbinden der Ladestation (1) mit einem Wartungsgerät bereitstellbar ist,
**dadurch gekennzeichnet,**
**dass** der Öffnungsvorgang der Wartungsklappe (10) eine Einschaltroutine auslöst und dass im Zuge der Einschaltroutine das Wartungsnetzwerk (9) durch die Netzwerkeinheit (11) aufgebaut wird.

2. Ladestation nach Anspruch 1, **dadurch gekennzeichnet, dass** der Öffnungsvorgang eine, insbesondere schwenkende, Öffnungsbewegung der Wartungsklappe (10) umfasst und dass die Öffnungsbewegung die Einschaltroutine auslöst, oder,
dass der Öffnungsvorgang eine Entriegelung der Wartungsklappe (10) und die, insbesondere schwenkende, Öffnungsbewegung der Wartungsklappe (10) umfasst und dass die Entriegelung oder die Öffnungsbewegung die Einschaltroutine auslöst.

3. Ladestation nach Anspruch 1 oder 2, **dadurch gekennzeichnet, dass** die Ladestation (1) einen Sensor (12) zum Erfassen zumindest eines Teils des Öffnungsvorgangs aufweist, vorzugsweise,
dass der Sensor (12) derart eingerichtet ist, dass der Sensor (12) die Öffnungsbewegung der Wartungsklappe (10) und/oder die Entriegelung der Wartungsklappe (10) erfasst.

4. Ladestation nach einem der vorhergehenden Ansprüche, **dadurch gekennzeichnet, dass** der Öffnungsvorgang der Wartungsklappe (10) eine Abschaltroutine auslöst und dass im Zuge der Abschaltroutine zumindest ein Teil einer Elektronik, insbesondere der Leistungselektronik (7), oder die Elektronik der Ladestation (1), insbesondere die Leistungselektronik (7), abgeschaltet und/oder ein Ladevorgang unterbrochen wird, vorzugsweise,
dass die Öffnungsbewegung der Wartungsklappe (10) die Abschaltroutine auslöst, oder,
dass die Entriegelung der Wartungsklappe (10) die Abschaltroutine auslöst.

5. Ladestation nach einem der vorhergehenden Ansprüche, **dadurch gekennzeichnet, dass** die Netzwerkeinheit (11) das Wartungsnetzwerk (9) entsprechend einer vordefinierten Abschaltbedingung abschaltet, vorzugsweise, dass die Abschaltbedingung eine Verbindungsbedingung und/oder eine Zeitbedingung und/oder eine Sensorbedingung (12) umfasst.
